Europäisches Patentamt

European Patent Office

Office européen des brevets

(11) Veröffentlichungsnummer: **0 438 644 A1**

## (12) EUROPÄISCHE PATENTANMELDUNG

(21) Anmeldenummer: 90120969.2

(22) Anmeldetag: 01.11.90

(51) Int. Cl.⁵: **G01P 3/489**

(30) Priorität: 07.12.89 DE 3940504

(43) Veröffentlichungstag der Anmeldung:
31.07.91 Patentblatt 91/31

(84) Benannte Vertragsstaaten:
**ES FR GB IT NL SE**

(71) Anmelder: **MERCEDES-BENZ AKTIENGESELLSCHAFT**
**Postfach 60 02 02**
**W-7000 Stuttgart 60(DE)**

(72) Erfinder: **Maass, Manfred**
**Humboldtstrasse 2/3**
**W-7300 Esslingen(DE)**
Erfinder: **Flamm, Wolfgang**
**Friedrichstrasse 7**
**W-7445 Bempflingen(DE)**

(54) **Verfahren zur Bestimmung der Drehzahl einer Welle.**

(57) Es wird ein Verfahren zur Bestimmung der Drehzahl von Wellen beschrieben mit einem mit dieser Welle gekoppelten Geberglied, welches eine Vielzahl von Geberelementen aufweist, und mit einem Drehzahlsensor, der beim Vorbeilaufen der Geberelemente entsprechende elektrische, wiederkehrende Drehzahlsignale (14) liefert sowie mit Gliedern zur Auswertung und Beeinflussung dieser Signale. Zur Aufbereitung der Drehzahlsignale (14) zu einer einheitlichen Drehzahlinformation unabhängig von der Verwendung von Gebergliedern mit unterschiedlicher Anzahl von Geberelementen wird vorgeschlagen, daß die Drehzahlinformation (14) auf einen von der Istzahl der Geberelemente des Gebergliedes weitgehend unabhängigen Sollwert für die Anzahl von Drehzahlsignalen pro Umdrehung der Welle normiert wird und daß aus der Gesamtheit aller Drehzahlsignale einer Umdrehung der Welle einzelne Drehzahlsignale ($18, t_2, t_3$) im Verhältnis der Istzahl der Geberelemente zur gewünschten einstellbaren Sollzahl ausgeblendet werden.

EP 0 438 644 A1

*Fig. 4*

# VERFAHREN ZUR BESTIMMUNG DER DREHZAHL EINER WELLE

Die Erfindung betrifft ein Verfahren zur Bestimmung der Drehzahl einer Welle nach dem Oberbegriff des Patentanspruchs 1.

Aus der GB 2 159 955 ist es bekannt, die Drehzahl einer Brennkraftmaschine dadurch zu bestimmen, daß mittels eines Sensors das Vorbeilaufen der Zähne eines mit der Kurbelwelle der Brennkraftmaschine verbundenen Zahnrads erfaßt wird. Die Zähnezahl des Zahnrads bestimmt dabei die Anzahl der Drehzahlmessungen während jeder Umdrehung der Kurbelwelle. Nach einer Umformung in Rechtecksignale werden die Drehzahlsignale einem Zähler zugeführt, der sie in bekannter Weise mittels eines Zählimpulsgenerators zählt. Die Anzahl der Zählimpulse zwischen zwei positiven Flanken des Drehzahlsignals verhält sich dabei umgekehrt proportional zur Drehzahl der Brennkraftmaschine. Nach der Zählung wird die Drehzahlinformation zum Beispiel durch Mittelwertbildung aufgearbeitet und weiterbearbeitet.

Als nachteilig bei einem derartigen Verfahren hat sich erwiesen, daß die Drehzahlmessung abhängig von der Anzahl der auf dem Geberglied befindlichen Geberelemente ist. Geberglieder mit unterschiedlicher Anzahl von Geberelementen, das heißt Zahnräder mit unterschiedlichen Zähnezahlen, wie sie bei unterschiedlichen Brennkraftmaschinen vorkommen, ergeben unterschiedliche Drehzahlinformationen am Ausgang der Auswerteeinheit, so daß keine einheitliche Auswerteeinheit für alle zum Einsatz kommenden Geberglieder verwendet werden kann.

Aufgabe der Erfindung ist es daher, ein Verfahren der bekannten Art derart zu verbessern, daß die vom Sensor aufgenommenen Drehzahlsignale auch bei Verwendung von Gebergliedern mit unterschiedlicher Anzahl von Geberelementen zu einer einheitlichen Drehzahlinformation aufbereitet werden können.

Die Aufgabe wird erfindungsgemäß durch die im kennzeichnenden Teil der beiden nebengeordneten Patentansprüche 1 bzw. 4 angegebenen Merkmale gelöst. Weitere Merkmale und Ausgestaltungen der Erfindung gehen aus den Unteransprüchen und der Beschreibung hervor.

Ein mit einer Welle verbundenes Geberglied mit einer Vielzahl von Geberelementen erzeugt in einem ihm zugeordneten Sensor wiederkehrende Drehzahlsignale, die in einer Auswerteschaltung weiterverarbeitet werden. Um auch bei der Verwendung von Gebergliedern mit unterschiedlicher Anzahl von Geberelementen, das heißt zum Beispiel bei Brennkraftmaschinen von Anlasserzahnrädern mit unterschiedlicher Zähnezahl, eine einheitliche Drehzahlinformation zu erhalten, wird die Anzahl der Drehzahlsignale pro Umdrehung der Welle auf einen von der Istzahl der Geberelemente des Geberglieds weitgehend unabhängigen Sollwert, der von dem mit der geringsten Anzahl von Geberelementen versehenen Geberglied bestimmt ist, normiert, indem aus der Gesamtheit aller Drehzahlsignale pro Umdrehung der Welle einzelne Drehzahlsignale im Verhältnis der Istzahl der Geberelemente zur gewünschten einstellbaren Sollzahl ausgeblendet werden. Bei nicht ganzzahligem Verhältnis von Istzahl zu Sollzahl werden die entstehenden überzähligen Drehzahlsignale in den Auswertezyklus der darauffolgenden Wellenumdrehung übernommen.

Zur Normierung der Drehzahlsignale für den Fall, daß die Anzahl der Geberelemente des Geberglieds nicht nur größer ist als der gewünschte Sollwert, sondern auch kleiner sein kann, wird die Periodendauer jedes einzelnen vom Sensor gelieferten Drehzahlsignals ermittelt und mit einem aus dem Verhältnis der Anzahl der Geberelemente des Geberglieds zum gewünschten, einstellbaren Sollwert gebildeten Faktor multipliziert. Das derart gebildete Ausgangssignal weist, je nach ermitteltem Multiplikationsfaktor, eine längere oder kürzere Signaldauer auf, als das Eingangsdrehzahlsignal und wird nach Ablauf der Periodendauer des vorangegangenen Eingangsdrehzahlsignals zur weiteren Verarbeitung als normierte Drehzahlinformation bereitgestellt. Zur exakteren Erfassung der Eingangsdrehzahlsignale kann die Periodendauer derselben abwechselnd von deren steigenden Flanke zur steigenden Flanke und von fallender Flanke zu fallender Flanke ermittelt werden. Eine weitere Steigerung der Genauigkeit des Verfahrens ist dadurch erreichbar, daß das Ausgangsdrehzahlsignal nicht erst nach Ablauf der Periodendauer des vorangegangenen Eingangsdrehzahlsignals, sondern schon nach Ablauf der Dauer der ersten Halbperiode des Eingangsdrehzahlsignals bereitgestellt wird.

Ausführungsbeispiele für die Erfindung sind nachstehend anhand der Zeichnung beschrieben. Es zeigt

Figur 1     eine Schaltungsanordnung zur Durchführung des Verfahrens nach Anspruch 1,

Figur 2     ausschnittsweise die Signalverläufe nach dem beschriebenen Verfahren,

Figur 3     eine Schaltungsanordnung zur Durchführung des Verfahrens nach Anspruch 4,

Figur 4     die entsprechenden Signalverläufe zu der in Figur 3 gezeigten Schaltungsanordnung,

Figur 5     die Signalverläufe nach einer Ausgestaltung des Verfahrens unter Berücksichtigung von Halbperioden,

Figur 6  die Signalverläufe nach einer weiteren Ausgestaltung des Verfahrens.

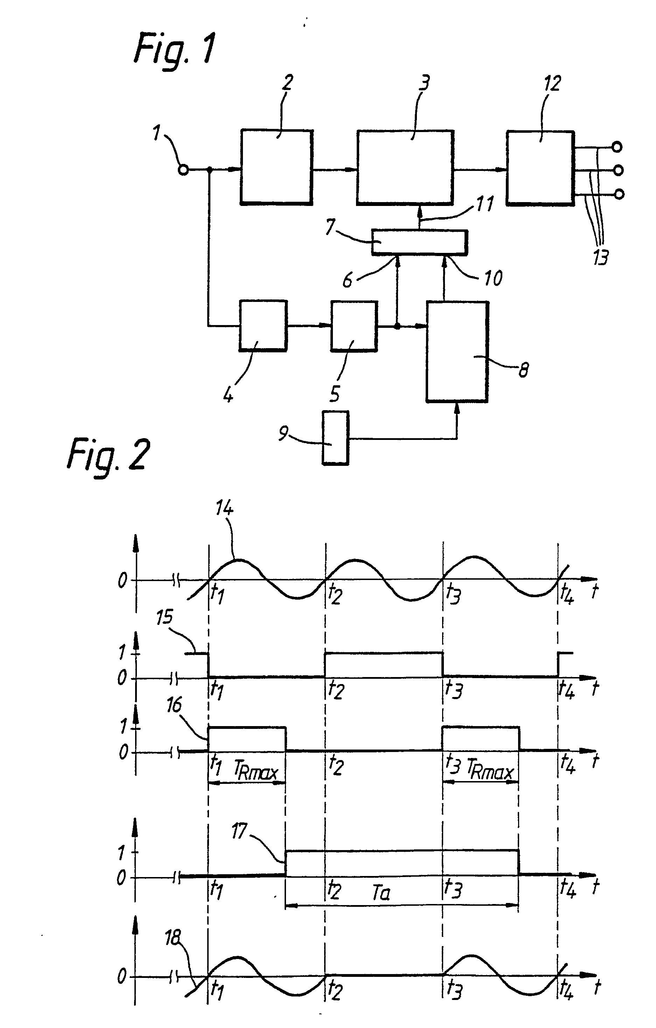

Figur 1 zeigt eine Schaltungsanordnung zur Durchführung des erfindungsgemäßen Verfahrens nach Anspruch 1. Am Eingang 1 der Schaltungsanordnung liegen Drehzahlsignale an, die in bekannter und daher hier nicht gezeigter Weise von einem Sensor gewonnen werden, welcher das Vorbeilaufen der Geberelemente eines mit der Kurbelwelle einer Brennkraftmaschine gekoppelten Gebergliedes erfaßt. Als geeignetes Geberglied hat sich das Anlasserzahnrad der Brennkraftmaschine erwiesen, dessen Geberelemente die auf ihm angeordneten Zähne darstellen. Durch das Vorbeilaufen dieser Zähne bei der Drehung der Kurbelwelle an einem feststehenden Sensor, der z.B. als induktiver oder magnetischer Sensor ausgebildet sein kann, werden in diesem Sensor wiederkehrende, die Polarität wechselnde, Drehzahlsignale erzeugt, welche dieser mittels einer Übertragungsleitung an den Eingang 1 der Schaltungsanordnung weitergibt. Die Eingangsdrehzahlsignale werden vom Eingang 1 an eine Eingangsstufe 2 gegeben, die die Signale für die weitere Verarbeitung in einem Signalentferner 3 zu hochohmigen Signalen aufbereitet. Gleichzeitig gelangen die Eingangsdrehzahlsignale vom Eingang 1 jedoch auch noch zu einem Impulsformer, welcher aus einem Schmitt-Trigger 4 besteht, der die Eingangssignale mit einer auf 0 V eingestellten Triggerschwelle zu zwischen einem 0-Pegel und einem 1-Pegel wechselnden Rechteckpulsen umformt. Das rechteckförmige Signal gelangt von hier zu einem Freguenzteiler 5, der mit einem Teilerverhältnis von 2:1 arbeitet und auf diese Weise bewirkt, daß immer nur ganze Impulse weiterverarbeitet werden. Dieses Signal wird vom Ausgang des Freguenzteilers 5 einerseits an den einen Eingang 6 eines UND-Glieds 7 geführt und andererseits zu einem Rechner 8, der üblicherweise als frei programmierbarer Rechner, d.h. als Mikroprozessor, ausgeführt ist. Über eine Voreinstelleinrichtung 9 werden dem Rechner die Istzahl der Geberelemente des Geberglieds, d.h. also die Istzahl der Zähne des Anlasserzahnrads, und der gewünschte Sollwert, d.h. also die Anzahl der Zähne des mit der geringsten Zahnzahl ausgestatteten zum Einsatz kommenden Anlasserzahnrads, eingegeben. Mit Hilfe eines in einem Permanentspeicher des Rechners 8 abgespeicherten Programmes ermittelt dieser die aus dem Eingangsdrehzahlsignal zur Erzielung einer normierten Drehzahlinformation pro Wellenumdrehung im Verhältnis c von Istzahl z der Zähne zu Sollwert s gleichmäßig verteilt auszublendenden Drehzahlsignale und gibt zu diesem Zweck ein Steuersignal an den zweiten Eingang 10 des UND-Glieds 7. Liegt an beiden Eingängen 6 bzw.

10 des UND-Gliedes 7 ein Signalpegel an, so wird der Ausgang 11 des UND-Gliedes 7 gesetzt und bewirkt im Signalentferner 3 die Löschung, das heißt Ausblendung des entsprechenden Drehzahlsignals zum Beispiel durch Kurzschließen desselben. Die derart entstandenen normierten Drehzahlsignale gelangen von hier zu einer Ausgangsstufe 12, in welcher sie entsprechend den weiteren Anforderungen ausgabegerecht aufbereitet, zum Beispiel verstärkt, werden und welche sie bei Bedarf auch vervielfacht und gleichzeitig der Signalentkopplung dient. Die aufbereiteten und normierten Drehzahlsignale stehen dann an den Ausgängen 13 zur Verfügung und können zu unterschiedlichen Zwecken der Brennkraftmaschinen- oder Fahrzeugsteuerung oder -regelung, wie zum Beispiel der Zündungssteuerung, verwendet werden.

Anhand der Figur 2 wird das Verfahren im Einzelnen beschrieben. Diese Figur zeigt einzelne Signalverläufe aus der oben beschriebenen Schaltung über der Zeitachse t. In der Reihenfolge von oben nach unten sind zu sehen das Eingangsdrehzahlsignal 14, wie es am Eingang der oben beschriebenen Schaltung anliegt, das am Ausgang des Freguenzteilers liegende Signal 15, die Rechnerzeit 16, das Ausgangssignal 17 des Rechners sowie abschließend das normierte Drehzahlsignal 18, wie es am Ausgang des Signalentferners zur weiteren Verarbeitung bzw. Nutzung zur Verfügung steht. Der zeitliche Ablauf des Verfahrens ist hier nicht vollständig dargestellt, sondern es wurde der Einfachheit und Übersichtlichkeit halber ein beliebiger Ausschnitt aus einem Auswertezyklus einer Wellenumdrehung herausgegriffen. Mit dem Vorbeilaufen der einzelnen Zähne des Anlasserzahnrads der Brennkraftmaschine am Drehzahlsensor wird in diesem das hier dargestellte, vereinfacht als sinusförmig angenommene, Eingangsdrehzahlsignal 14 erzeugt, wobei jedem Zahn des Anlasserzahnrads eine Periode ($t_1$-$t_2$, $t_2$-$t_3$, usw.) des Sinussignals zugeordnet ist, und einerseits an die Eingangsstufe sowie andererseits an einen als Schmitt-Trigger ausgebildeten Impulsformer weitergegeben. Dessen Schaltschwelle ist auf 0 V gesetzt, so daß den positiven Halbwellen des Sinussignals der 1-Pegel und den negativen Halbwellen der 0-Pegel eines Rechtecksignales entspricht. Das resultierende zwischen 0-Pegel und 1-Pegel wechselnde Rechtecksignal wird einem Freguenzteiler mit dem Teilerverhältnis 2:1 zugeführt, der auf die steigende Flanke des Eingangssignals anspricht. Die Verwendung dieses Freguenzteilers stellt sicher, daß bei der weiteren Verarbeitung des Drehzahlsignals immer nur ganze Rechteckimpulse verarbeitet werden, das heißt daß auch immer nur ganze Perioden des Eingangsdrehzahlsignals mit Hilfe der Schaltung beeinflußt, das heißt ausgeblendet werden. Dieses so gewonnene Rechtecksignal 15 gelangt, wie oben beschrieben einerseits an den einen Eingang eines UND-Glieds und andererseits an den Eingang eines Rechners, zum Beispiel eines Mikroprozessors, dessen Aufgabe es ist, ein Steuersignal 17 zu erzeugen, mit Hilfe dessen einzelne Perioden aus dem Eingangsdrehzahlsignal 14 ausgeblendet bzw. gelöscht werden sollen. Zur Ermittlung der über eine Wellenumdrehung gleichmäßig verteilt auszublendenden Eingangssignalperioden erhält der Rechner die Information über die Istzahl der Zahnräder des Anlasserzahnrads und über den gewünschten Soll-Wert, der gleichbedeutend ist mit der Anzahl der Zähne des mit der geringsten Zahnzahl zum Einsatz kommenden Anlasserzahnrads. Der Rechner startet seine Berechnung mit der fallenden Flanke des Freguenzteilersignals 15 zum Zeitpunkt $t_1$ und muß diese Berechnung vor Ablauf der Signalperiode, das heißt also vor dem Zeitpunkt $t_2$, nach einer maximalen Rechnerzeit $T_{Rmax}$ abgeschlossen haben. Wegen dieser endlichen Rechnerzeit $T_{Rmax}$ muß die Berechnung zur Ausblendung einer bestimmten Periode aus dem gesamten Eingangsdrehzahlsignal 14 innerhalb der Dauer einer vorangehenden Periode erfolgen, damit ein Rechnerausgangssignal 17 rechtzeitig vor Beginn des darauffolgenden Drehzahlsignals bereitsteht. Nach Beenden der Rechnerzeit $T_{Rmax}$ steht das Rechnerausgangssignal 17 für die Signalausblendung am zweiten Eingang des UND-Glieds zur Verfügung. Erst wenn zum Zeitpunkt $t_2$ das Freguenzteilersignal 15, das wie oben beschrieben am ersten Eingang des UND-Glieds anliegt, ebenfalls 1-Pegel aufweist, wird auch der Ausgang des UND-Glieds geschaltet und blendet das zu dieser Zeit im Signalentferner vorhandene Eingangsdrehzahlsignal 14, zum Beispiel durch Kurzschließen desselben, aus. Wenn zum Zeitpunkt $t_3$ das Freguenzteilersignal 15 zwangsläufig wieder 0-Pegel annimmt, kann auch der Ausgang des UND-Glieds - trotz des noch anliegenden 1-Pegels vom Rechnerausgangssignal 17 - nicht mehr gesetzt sein und folglich auch kein Drehzahlsignal mehr ausblenden. Das Drehzahlsignal 14 wird unverändert an die Ausgangsstufe weitergegeben. Mit der fallenden Flanke des Freguenzteilersignals 15 (hier zum Zeitpunkt $t_3$) beginnt erneut die Rechnerzeit 16, die eine maximale Dauer von $T_{Rmax}$ hat, und nach Ablauf dieser Zeit das Rechnerausgangssignal 17 auf 0-Pegel zurücksetzt. Das Drehzahleingangssignal 14 wird also nur während der Zeit ausgeblendet, während der sowohl das Freguenzteilersignal 15 (maximal eine Periodendauer des Drehzahleingangssignals 14), als auch das Rechnerausgangssignal 17 (Dauer $T_a$) 1-Pegel aufweisen. In der übrigen Zeit gelangt das Drehzahleingangssignal 14 unverändert direkt zur Ausgangsstufe der Schaltung. Dieser Verlauf, in dem folglich einzelne Perioden des Eingangsdrehzahlsignals 14 im Verhältnis der Istzahl der Zahnräder des Anlasserzahnrads zum gewünschten Sollwert des kleinsten zum Einsatz kommenden Zahnrads ausgeblendet werden, ist durch das Signal 18 dargestellt. Wie leicht zu sehen ist, kann mit diesem Verfahren maximal nur jede zweite Periode aus dem Drehzahleingangssignal 14 ausgeblendet werden. Es besteht also die Einschränkung in der Hinsicht, daß die Zähnezahl des Anlasserzahnrads mit der größten Zähnezahl maximal nur doppelt so groß sein darf, wie die Zähnezahl des Anlasserzahnrad mit der geringsten Zähnezahl.

Für den Fall, daß das oben genannte Verhältnis von Istzahl zu Sollwert nicht ganzzahlig ausfallen sollte, können dabei entstehende überzählige Perioden des Eingangsdrehzahlsignals 14 in den Auswertezyklus der darauffolgenden Wellenumdrehung übernommen werden. Dieser Vorgang wird während sovieler Auswertezyklen durchgeführt, bis keine überzähligen Perioden mehr auftreten und wiederholt sich im Anschluß daran wieder von Neuem.

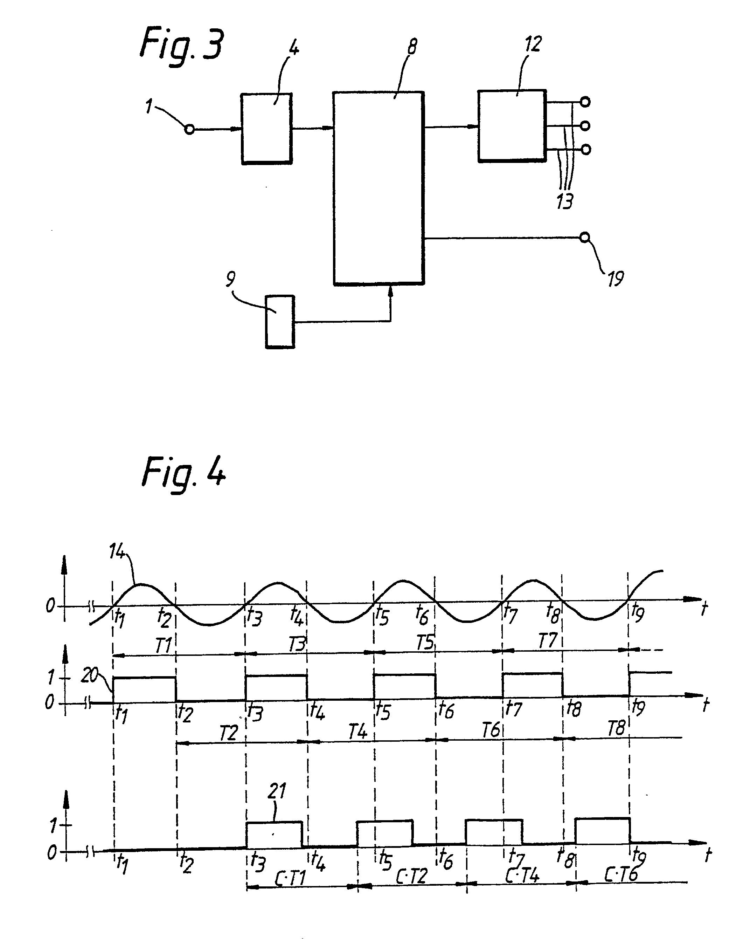

Figur 3 beschreibt eine Schaltungsanordnung zur Durchführung des Verfahrens nach Anspruch 4. Ziel dabei ist es insbesonders, die normierte Drehzahlinformation am Ausgang der Schaltung mit möglichst geringer Zeitverzögerung gegenüber den Eingangsdrehzahlsignalen zur Verfügung zu stellen. Die mit den in Figur 1 gezeigten übereinstimmenden Glieder sind mit gleichen Bezugszeichen versehen. So liegen am Eingang 1 der Schaltung Drehzahlsignale an, die - wie oben schon beschrieben - aus der Drehung eines Anlasserzahnrads gewonnen werden. Diese Drehzahlsignale werden in einem als Schmitt-Trigger ausgebildeten Impulsformer 4 zu zwischen einem 0-Pegel und einem 1-Pegel wechselnden Rechtecksignalen aufbereitet, das heißt digitalisiert, bevor sie zu einem Rechner 8 weitergeleitet werden, welcher üblicherweise aus einem frei programmierbaren Mikroprozessor besteht und die Aufgabe hat, aus den am Eingang 1 anliegenden Eingangsdrehzahlsignalen eine normierte und damit von der Anzahl der Zähne des Anlasserzahnrads weitgehend unabhängige Drehzahlinformation zu bilden, die in einer Ausgangsstufe 12 aufbereitet sowie entkoppelt und nach eventueller Vervielfachung an den Ausgängen 13 zur weiteren Verwendung bereitgestellt werden. Zu diesem Zweck werden über eine Voreinstelleinrichtung 9 dem Rechner 8 Informationen über die Istzahl $z$ der Zähne des Anlasserzahnrads sowie über den gewünschten Sollwert $s$, auf den normiert werden soll, gegeben. Außerdem kann am Rechner 8 noch ein weiterer Ausgang 19 vorgesehen sein, der zusätzliche Informationen liefert, wie zum Beispiel über Impulsaussetzer am Drehzahlsensor, die durch eine gestörte Erfassung des Vorbeilaufens einzelner Zähne des Anlasserzahnrads am Sensor entstehen können.

Die Figur 4 zeigt für das Verfahren einzelne Signalverläufe über der Zeitachse t. Mit 14 ist wiederum das vom Drehzahlsensor gelieferte und am Eingang anliegende Eingangsdrehzahlsignal bezeichnet, das wiederum vereinfacht angenommen sinusförmig dargestellt ist. Das Eingangsdrehzahlsignal 14 ist periodisch mit der Periodendauer $T_1$, $T_3$, $T_5$, ... entsprechend $t_1$-$t_3$, $t_3$-$t_5$, usw. Das Eingangsdrehzahlsignal 14 wird - wie oben beschrieben - einem Impulsformer mit der Schaltschwelle 0 V zugeführt, der daraus das direkt unter dem Signal 14 dargestellte rechteckförmige Signal 20 mit den Signalpegeln 0 und 1 bildet.

Die Periodendauer $T_1$ bzw. $T_3$ bzw. $T_5$ usw. der rechteckförmigen Signale 20 wird ermittelt und mit einem aus den voreingestellten Werten für die Istzahl z der Zahnräder und dem Sollwert s im Rechner gebildeten Verhältnisfaktor $c = \frac{z}{s}$ multipliziert. Nach vollständigem Ablauf der ersten Periode des Eingangssignals wird das so gewonnene Ergebnis dieser Berechnung am Rechnerausgang bereitgestellt, um - wie oben beschrieben - an die Ausgangsstufe weitergeleitet zu werden. Die Periodendauer des Ausgangssignals beträgt also $c^*T_i$, wobei $c = \frac{z}{s}$ ist und $T_i$ die jeweilige Periodendauer der eingehenden Drehzahlsignale 20 bezeichnet. Um das vom Rechner ausgegebene Signal vorteilhafterweise möglichst aktualisiert zu erhalten, wird in dem in dieser Figur beschriebenen Verfahren eine fließende Eingangssignalmessung angewendet. Das bedeutet, daß die Periodendauer $T_i$ des Rechtecksignals 20 nicht nur von steigender zu steigender Flanke des Signals 20 gemessen wird ($T_1$, $T_3$, $T_5$, usw.), sondern zusätzlich auch noch von fallender zu fallender Flanke ($T_2$, $T_4$, $T_6$, usw.). Das auf diese Weise gewonnene Signal am Ausgang des Rechners ist mit 21 bezeichnet und in der Figur 4 unten gezeigt.

Nach der Messung der ersten Eingangssignalperiode $T_1$, die vom Zeitpunkt $t_1$ bis zum Zeitpunkt $t_3$ dauert, wird die Dauer dieser Periode mit dem oben erwähnten Faktor $c = \frac{z}{s}$ multipliziert und stellt die Periodendauer $c^*T_1$ für das auszugebende Signal 21 dar, welches zum Zeitpunkt $t_3$ nach vollständig beendeter Periode $T_1$ am Ausgang des Rechners bereitsteht. Da in diesem Ausführungsbeispiel angenommen ist, daß die Istzahl z der Zähne kleiner ist als der gewünschte Sollwert s und folglich der Quotient c dieser beiden Größen kleiner ist als 1, ist auch die Periodendauer $c^*T_1$ kleiner als die Dauer der Periode $T_1$ des Eingangssignals 20. Daraus folgt, daß die Periode des Ausgangssignals 21, wie aus der Figur ersichtlich ist, schon vor dem Zeitpunkt $t_4$ endet. Zu diesem Zeitpunkt der Beendigung der Signalperiode $c^*T_1$, der zwischen den Zeitpunkten $t_4$ und $t_5$ liegt, hat der Rechner bereits die Messung der Eingangssignalperiode $T_2$ abgeschlossen, nicht jedoch die

Messung der Eingangssignalperiode $T_3$. Folglich bestimmt sich die Periodendauer des nächsten auszugebenden Ausgangssignals 21 aus der letzten vollständig beendeten Periode des Eingangssignals zu $c^*T_2$ und endet zwischen den Zeitpunkten $t_6$ und $t_7$. Zum Zeitpunkt dieser Beendigung ist jedoch nicht nur die Messung der Eingangsperiode $T_3$, sondern auch schon der Eingangsperiode $T_4$ abgeschlossen, so daß sich die Periodendauer des nächsten Ausgabesignals nach dieser zuletzt gemessenen Periode zu $c^*T_4$ bestimmt. Die Periode $T_3$ wird also quasi übersprungen durch die inzwischen aktuellere Periode $T_4$. In analoger Weise setzt sich das Verfahren im weiteren fort und braucht daher hier nicht weiter beschrieben zu werden. Resultat des Verfahrens ist also bei einer gegebenen Istzahl z der Zähne des Anlasserzahnrads und folglich auch bei der gleichen Anzahl z der Drehzahleingangssignale pro Wellenumdrehung eine Normierung der Signale auf einen gewünschten und im Rechner voreingestellten Sollwert s.

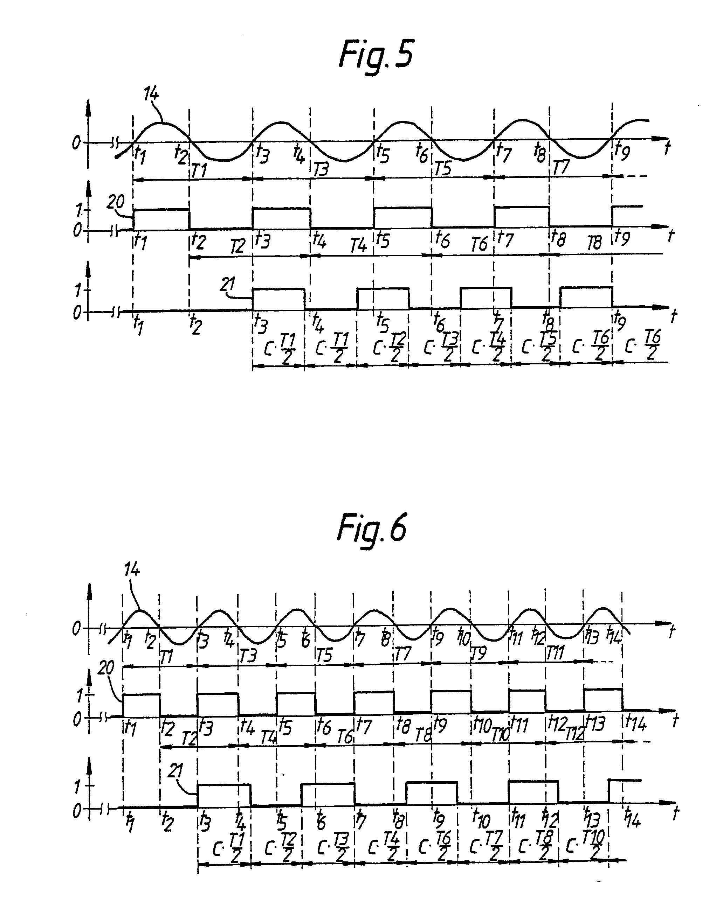

In Figur 5 ist eine Abwandlung dieses Verfahrens dargestellt. Auch hier ist die Istzahl z der Zähne kleiner angenommen als der gewünschte Sollwert s, wodurch der Faktor c wiederum kleiner als 1 ist. Folglich ist auch die Periodendauer des mit derselben Bezugsziffer versehenen Ausgangssignals 21 geringer als die Periodendauer des entsprechenden Eingangssignals vor (14) bzw. nach (20) seiner Bearbeitung. Im Unterschied zu dem in Figur 4 dargestellten Ausführungsbeispiel werden hier jedoch die Halbperioden des Ausgangssignals 21 ermittelt und am Ausgang des Rechners zur weiteren Verarbeitung bereitgestellt. Auch in diesem Fall kann die nächste auszugebende Halbperiode des Ausgangssignals 21 erst nach Abschluß der vorangegangenen Vollperiode des Eingangssignals 20 berechnet und ausgegeben werden. Doch ergibt sich durch die Ausgabe von Halbperioden eine gesteigerte Aktualität der Ausgabedaten, da wie bei einem Vergleich der Ausgangssignale 21 bei gleichen Eingangssignalen 20 in den Figuren 4 und 5 leicht zu sehen ist, beispielsweise zum Zeitpunkt $t_6$ nach Figur 4 noch ein aus der Eingangsperiode $T_2$ berechnetes Ausgangssignal mit der Periodendauer $c^*T_2$ gilt, während zum gleichen Zeitpunkt $t_6$ nach Figur 5 schon ein aus der aktuelleren Eingangssignalperiode $T_3$ berechnetes Ausgangssignal mit der Periodendauer $c^*T_3$ gilt.

Im Gegensatz zu den in den Figuren 4 und 5 gezeigten Beispielen sei in Figur 6 angenommen, daß die Istzahl z der Zähne größer ist als der gewünschte Sollwert s, wodurch der Faktor c als Quotient dieser beiden Größen größer als 1 wird. Dadurch ergibt sich eine im Vergleich zur Dauer der Perioden der Eingangsdrehzahlsignale 14 bzw. 20 längere Periodendauer der auch in diesem Fall aus zwei errechneten Halbperioden zusammengesetzten Ausgangsdrehzahlsignale 21. Ansonsten gilt auch für dieses Beispiel das schon zuvor Gesagte, so daß sich eine weitere Beschreibung erübrigt, da das Verfahren analog zu dem beschriebenen abläuft.

Im Rahmen der Erfindung können Signalaussetzer, wie sie am die Drehzahlsignale des Gebergliedes aufnehmenden Drehzahlsensor vorkommen können, im Rechner durch eine Korrelation mit gespeicherten, maximal möglichen Drehzahländerungen, die zum Beispiel durch Beschleunigungsvorgänge der Maschine auftreten, erkannt und im Verfahren bei der Ermittlung der Drehzahl berücksichtigt werden. Diese erkannten Aussetzer können über einen gesonderten Ausgang des Rechners zu einer weiteren Verarbeitung ausgegeben werden.

**Patentansprüche**

1. Verfahren zur Bestimmung der Drehzahl einer Welle mit einem mit dieser Welle gekoppelten Geberglied, welches eine Vielzahl von Geberelementen aufweist und mit einem Drehzahlsensor, der beim Vorbeilaufen der Geberelemente entsprechende elektrische, wiederkehrende Drehzahlsignale liefert sowie mit Gliedern zur Auswertung und Beeinflussung dieser Signale,
**dadurch gekennzeichnet,**
daß die Drehzahlinformation auf einen von der Istzahl (z) der Geberelemente des Gebergliedes weitgehend unabhängigen Sollwert (s) für die Anzahl von Drehzahlsignalen pro Umdrehung der Welle normiert wird, wobei der Sollwert (s) kleiner ist als der Istwert (z) und daß aus der Gesamtheit aller Drehzahlsignale einer Umdrehung der Welle einzelne Drehzahlsignale im Verhältnis (c) der Istzahl (z) der Geberelemente zur gewünschten einstellbaren Sollzahl (s) ausgeblendet werden.

2. Verfahren nach Anspruch 1,
**dadurch gekennzeichnet,**
daß bei nicht ganzzahligem Verhältnis von Istzahl (z) der Geberelemente zu Sollzahl (s) entstehende überzählige Drehzahlsignale einer Umdrehung der Welle in den Auswertezyklus der darauffolgenden Umdrehung übernommen werden.

3. Vorrichtung zur Durchführung des Verfahrens nach einem der Ansprüche 1 oder 2,
**dadurch gekennzeichnet,**
daß das Auswerteglied eine Eingangsstufe (2) zur Aufbereitung der Drehzahlsignale zu einem Signalentferner (3) zugeführten hochohmigen Signalen aufweist, von wo aus diese Signale zu einer Ausgangsstufe (12) gelangen, welche die Signale ausgabegerecht verarbeitet und daß das Auswerteglied ferner einen Impulsformer (4) enthält, der die Drehzahlsignale in Rechtecksignale umformt, die einem Frequenzteiler (5) zugeführt werden, von wo aus die Rechtecksignale einerseits zu einem Eingang (6) eines UND-Glieds (7) und andererseits zum Eingang eines Rechenglieds (8) gelangen, welches Rechenglied (8) gemäß den voreingestellten Soll- (s) und Istwerten (z) der Geberelemente die aus der Folge der Drehzahlsignale einer Umdrehung der Welle auszublendenden einzelnen Drehzahlsignale bestimmt und ein entsprechendes Signal an den zweiten Eingang (10) des UND-Glieds (7) liefert, dessen Ausgang mit dem Signalentferner (3) verbunden ist und durch Kurzschließen der hochohmigen Drehzahlsignale die gewünschten Drehzahlsignale ausblendet.

4. Verfahren zur Bestimmung der Drehzahl von Wellen mit einem mit dieser Welle gekoppelten Geberglied, welches eine Vielzahl von Geberelementen aufweist, insbesondere einem Anlasserzahnrad einer Brennkraftmaschine, und mit einem Drehzahlsensor, der beim Vorbeilaufen der Geberelemente entsprechende elektrische, wiederkehrende Drehzahlsignale liefert sowie mit Gliedern zur Auswertung und Beeinflussung dieser Signale,
**dadurch gekennzeichnet,**
daß die Drehzahlinformation auf einen von der Istzahl (z) der Geberelemente des Gebergliedes weitgehend unabhängigen Sollwert (s) für die Anzahl von Drehzahlsignalen pro Umdrehung der Welle normiert wird und daß die Periodendauer jedes einzelnen Drehzahlsignales in einem Rechenglied mit einem aus dem Verhältnis (c) der Istzahl (z) der Geberelemente zur gewünschten, einstellbaren Sollzahl (s) gebildeten Faktor multipliziert wird und als Ausgangssignal nach Ablauf der vorangegangenen periodendauer des Drehzahlsignals bereitgestellt wird.

5. Verfahren nach Anspruch 4,
**dadurch gekennzeichnet,**
daß die Periodendauer jedes Drehzahlsignales abwechselnd von steigender Flanke zu steigender Flanke und fallender Flanke zu fallender Flanke ermittelt wird.

6. Verfahren nach Anspruch 4 oder 5,
**dadurch gekennzeichnet,**
daß das Ausgangssignal nach Ablauf der vorangegangenen vollständigen Periode bereitgestellt wird.

7.  Verfahren nach Anspruch 4 oder 5,
    **dadurch gekennzeichnet,**
    daß das Ausgangssignal nach Ablauf der vorangegangenen Halbperiode bereitgestellt wird.

8.  Vorrichtung zur Durchführung des Verfahrens
    nach einem der Ansprüche 4 bis 7,
    **dadurch gekennzeichnet,**
    daß das Auswerteglied eine Eingangsstufe zur
    Aufbereitung der anschließend einem Rechenglied (8) zugeführten Drehzahlsignale aufweist,
    welches Rechenglied (8) gemäß den voreingestellten Soll- und Istwerten der Geberelemente
    einen Faktor (c) berechnet, mit dem die periodendauern der Drehzahlsignale multipliziert
    und einer Ausgangsstufe (12) zugeführt werden und welches Rechenglied (8) einen weiteren Ausgang (19) zur Ausgabe von Meldungen
    bezüglich Störungen der Eingangsdrehzahlsignale aufweist.

9.  Vorrichtung nach einem der Ansprüche 3 oder
    8,
    **dadurch gekennzeichnet,**
    daß das Rechenglied ein frei programmierbarer
    Rechner (Mikroprozessor) ist.

10. Verfahren nach einem der Ansprüche 1 bis 2
    oder 4 bis 7,
    **dadurch gekennzeichnet,**
    daß bei der Erfassung der Eingangsdrehzahlsi-
    gnale auftretende Signalaussetzer durch Korre-
    lation mit gespeicherten, maximal möglichen
    Drehzahländerungen erkannt und bei der Dreh-
    zahlermittlung berücksichtigt werden.

## Fig. 1

## Fig. 2

# Fig. 3

# Fig. 4

## Fig.5

## Fig.6

11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 583 166   (JAEGER)<br>* Seite 1, Zeilen 24-34; Seite 2, Zeilen 15-30; Figur 1 * | 4 | G 01 P<br>3/489 |
| Y |  | 1,5,9 | |
| A |  | 8 | |
|  | – – – | | |
| Y | PATENT ABSTRACTS OF JAPAN, Band 3, Nr. 124 (E-144)<br>17. Oktober 1979;<br>& JP-A-54 100 650 (TOKYO SHIBAURA DENKI K.K.)<br>08-08-1979<br>* Das gesamte Dokument * | 1 | |
|  | – – – | | |
| Y | FR-A-2 353 066   (BOSCH)<br>* Seite 1, Zeile 35 - Seite 2, Zeile 5; Figur 2 * | 5 | |
| A |  | 6,7 | |
|  | – – – | | |
| A | PATENT ABSTRACTS OF JAPAN, Band 9, Nr. 30<br>(P-333)[1753], 8. Februar 1985;<br>& JP-A-59 174 763 (HITACHI SEISAKUSHO K.K.)<br>03-10-1984<br>* Das gesamte Dokument * | 8 | **RECHERCHIERTE SACHGEBIETE (Int. Cl.5)** |
|  | – – – | | |
| Y | DE-U-8 801 362   (MANNESMANN KIENZLE)<br>* Schutzanspruch; Figur 2 * | 9 | G 01 P |
|  | – – – – – | | |

Der vorliegende Recherchenbericht wurde für alle Patentansprüche erstellt

| Recherchenort | Abschlußdatum der Recherche | Prüfer |
|---|---|---|
| Den Haag | 03 April 91 | HANSEN P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument